# EUROPÄISCHE PATENTSCHRIFT

(11) **EP 0 613 771 B1**
(45) Veröffentlichungstag und Bekanntmachung des Hinweises auf die Patenterteilung: **26.11.1997**
(21) Anmeldenummer: 94102565.2
(22) Anmeldetag: 21.02.1994
(51) Int. Cl.: B32B 27/20, B32B 27/32, B65D 65/40

(54) **Transparente, nicht siegelfähige orientierte Polyolefin-Mehrschichtfolie, Verfahren zu ihrer Herstellung und ihre Verwendung**
Non-sealable, transparent, oriented multilayer polypropylene film, process for making it, and its use.
Film multicouche en polypropylène, transparent, non-scellable et orienté, son procédé de fabrication et son utilisation.

(30) Priorität: 27.02.1993 DE 4306155
(43) Veröffentlichungstag der Anmeldung: 07.09.1994
(73) Patentinhaber: HOECHST AKTIENGESELLSCHAFT, 65926 Frankfurt am Main (DE)
(72) Erfinder: Peiffer, Herbert, Dr., D-55126 Mainz (DE); Murschall, Ursula, Dr., D-55283 Nierstein (DE); Schlögl, Gunter, Dr., D-65779 Kelkheim (DE)

(56) Entgegenhaltungen:
- EP-A- 0 124 310
- EP-A- 0 402 100
- EP-A- 0 408 971
- EP-A- 0 447 953
- DATABASE WPI Week 8916, Derwent Publications Ltd., London, GB; AN 89-118948 & JP-A-1 065 175 (NEW JAPAN CHEM.)
- DATABASE WPI Week 9112, Derwent Publications Ltd., London, GB; AN 88-045876 & JP-A-3 030 833 (MATSUMOTO YUSHI SEIYAKU)

## Beschreibung

*Die Erfindung betrifft eine transparente, nicht siegelfähige orientierte Polyolefin*-*Mehrschichtfolie, umfassend eine Basisschicht, die Polypropylen enthält, und mindestens eine nicht siegelfähige Deckschicht die 0,1 bis 0,6 Gew.-% SiO*_{*2*} *enthält.* Die Folien zeichnen sich durch hervorragende antistatische Eigenschaften in Verbindung mit hervorragendem Verarbeitungsverhalten und einem niedrigen Reibungskoeffizienten aus.

Transparente orientierte Polypropylenfolien werden z. B. bei der Glanzkaschierung mit Papier oder Karton eingesetzt. Die Folien sind in der Regel nicht siegelbar, da die Kaschierung durch Verklebung von Folie und Papier/Pappe erfolgt.

Diese Anwendung stellt an die Folienoptik und an die Verarbeitbarkeit der Folie hohe Ansprüche. Die optischen Eigenschaften der Folie werden vorrangig durch den Oberflächenglanz und die Trübung beschrieben. Für die Verarbeitbarkeit sind die Reibung, die Antistatik, das Abriebverhalten, das Dickenprofil, die Rollenaufmachung und die Planlage der Folie von großer Bedeutung.

Im Stand der Technik sind Folien mit einem niedrigen Reibungskoeffizienten beschrieben. Die Anforderungen an die Verarbeitungsfähigkeit der Folien und deren Lauffähigkeit auf automatischen Maschinen sind im Laufe der Jahre ständig gestiegen. Aus diesem Grund werden immer niedrigere Reibungskoeffizienten gefordert, wobei heute der Begriff "niedrig" Reibungswerte in einer Größenordnung von 0,3 bis 0,1 umfaßt, wohingegen vor einigen Jahren eine Reibung von 0,4 bis 0,5 durchaus als ausgezeichnet niedrig galt.

Die EP-A-0 124 310 beschreibt Folien mit einem niedrigen Reibungskoeffizienten, welche aus einer dicken Basisschicht und einer dünnen Deckschicht bestehen, welche fein verteilte anorganische Partikel enthält. Als anorganische Partikel werden SiO₂, Aluminiumsilikate, Natrium-Aluminium-Silikate, Ruß beschrieben. Die Teilchengröße liegt in einem Bereich von 0,2 bis 5,0 µm. Die Partikel wirken sich vorteilhaft auf den Reibungskoeffizienten der Folie aus.

Die EP-A-0 350 168 beschreibt eine Folie mit differenzierten Gleiteigenschaften der beiden Oberflächen. Die Deckschichten sind siegelfähig und enthalten als Antiblockmittel SiO₂.

Die EP-A-0 234 758 beschreibt eine Polyolefin-Mehrschichtfolie mit einer guten Aufnahmefähigkeit für Beschichtungen auf Wasserbasis. Die Polypropylen-Deckschicht enthält ein Antiblockmittel und Silikonöl. Als geeignete Antiblockmittel werden SiO₂, Silikate, Kreide, Ton und ähnliches beschrieben ohne Angaben zur Teilchengröße der verschiedenen Antiblockmittel im einzelnen.

Die DE-A-35 17 795 beschreibt Polypropylen-Mehrschichtfolien, deren Deckschicht eine Kombination von Amin, Polydialkylsiloxan und plättchenförmigem anorganischem Pigment enthält. Die Folie zeichnet sich durch gute Antiblock- und Gleiteigenschaften aus. Das plättchenförmige Pigment hat eine Blattstruktur. Geeignete Pigmente sind Silikate und Carbonate.

*Die EP-A 0 0379 913 beschreibt eine biaxial orientierte Kunststofffolie auf Basis von Polypropylen, die ein anorganisches teilchenförmiges Neutralisationsmittel, insbesondere Calciumcarbonat oder Magnesiumoxid enthält. Die Teilchen sind mit einem Überzug aus Wachs, Fettsäure Fettsäuresalz oder Fettsäureester versehen. Die Folie zeichnet sich durch verbesserte Gleiteigenschaften aus.*

*Die EF-A 0 408 971 beschreibt eine biaxial orientierte weiße Folie mit einer Polypropylen-Basisschicht, die Titandioxid und Calciumcarbonat enthält. Die Folie ist einseitig oder beidseitig mit Deckschichten versehen. Das Titandioxid weist eine Beschichtung aus mindestens einem anorganischen Oxid und organischen Verbindungen mit polaren und unpolaren Gruppen auf.*

In Anwendung der bekannten Lehren hat sich gezeigt, daß übliches SiO₂ bei der Herstellung und Weiterverarbeitung der Folien zu Ablagerungen an der Düsenlippe und zu einem erheblichen Abrieb auf den Walzen führt, über welche die Folie während der Produktion und bei der Weiterverarbeitung läuft. Es wurde gefunden, daß dieser Abrieb durch das in den Deckschichten enthaltene SiO₂ verursacht wird. Dieser Abrieb führt zu mehreren Schwierigkeiten. Zum einen müssen die Düsenlippe und die Walzen häufig gereinigt werden, da die Folie sonst schlecht läuft. Die Ablagerungen an der Düsenlippe führen zu einer Streifenbildung auf der Folie, die die Optik beeinträchtigt. Zusätzlich treten durch diese Verunreinigungen Probleme bei der Coronabehandlung auf. An den mit SiO₂-Abrieb behafteten Stellen der Walze schlägt die Coronabehandlung durch- und führt zum sogenannten unerwünschten Rückseiteneffekt. Durch diesen Rückseiteneffekt erfährt auch die Rückseite der einseitig corona- oder flammbehandelten Folie eine Vorbehandlung. Diese unerwünscht vorbehandelten Stellen auf der Rückseite führen zu partiellem Verblocken und zur Farbhaftung auf der Rückseite der Folie an diesen Stellen beim Bedrucken.

Des weiteren zeigen die im Stand der Technik beschriebenen Folien eine sehr schlechte Rollenaufmachung und eine schlechte Planlage. Darüber hinaus sind die antistatischen Eigenschaften noch verbesserungsbedürftig.

Der vorliegenden Erfindung liegt somit die Aufgabe zugrunde, eine mehrschichtige Polypropylenfolie zur Verfügung zu stellen, die die Nachteile der im Stand der Technik beschriebenen Folien, insbesondere die Entstehung von Abrieb bei der Produktion, vermeidet und für die Weiterverarbeitung geeignet ist. Die Folie soll einen niedrigen Reibungskoeffizienten, hervorragende antistatische Eigenschaften sowie eine gute Rollenaufmachung und Planlage aufweisen. Weiterhin ist gefordert, daß die Folie mindestens einseitig bedruckbar ist. Diese Verbesserungen sollen jedoch das äußere Erscheinungsbild der Folie nicht beeinträchtigen, d. h. die Folie soll gleichzeitig eine möglichst niedrige Trübung und einen hohen Glanz aufweisen.

*Erfindungsgemäß wird diese Aufgabe gelöst durch eine Folie der eingangs genannten Gattung, deren kennzeichnendes Merkmal darin besteht,daß das SiO*_{*2*} *organisch nachbehandelt ist und eine Beschichtung aufweist, die 0,5 - 5% einer aliphatischen Carbonsäure enthält und daß das SiO*_{*2*} *einen mittleren Teilchendurchmesser von 2 bis 6 µm aufweist.*

Überraschenderweise beeinträchtigt die Einarbeitung von organisch nachbehandeltem SiO₂ dieser Teilchengröße in die Homopolymerdeckschicht die ausgezeichnete Transparenz der Folie nur sehr wenig. Es ist aus dem Stand der Technik bekannt, daß die Einarbeitung partikelförmiger Füllstoffe in eine Homopolymer-Basisschicht beim Verstrecken zur Bildung von vakuolenartigen Hohlräumen in der Schicht führt. Je größer die Partikelgröße der Füllstoffe ist, desto größer sind die gebildeten Vakuolen. Diese füllstoffhaltigen Folien sind durch die Vakuolen nahezu undurchsichtig und weisen ein charakteristisches sogenanntes "opakes" Aussehen auf. Es war daher außerordentlich überraschend, daß die erfindungsgemäßen Folien in ihrer Transparenz kaum beeinträchtigt sind, da für einen Fachmann mit der Bildung von Vakuolen in der Homopolymerdeckschicht durch das SiO₂ und damit mit einer erheblichen Eintrübung der Folie zu rechnen war. Es wurde weiterhin völlig unerwartet gefunden, daß die erfindungsgemäße Folie kaum mehr Abrieberscheinungen bei der Produktion oder der Weiterverarbeitung zeigt. Aufgrund der großen Partikelgröße war mit noch größeren Abriebproblemen zu rechnen. Erstaunlicherweise tritt jedoch wesentlich weniger Abrieb auf.

Die Basisschicht der erfindungsgemäßen Mehrschichtfolie enthält im wesentlichen ein Propylenpolymer und gegebenenfalls zugesetzte Additive in jeweils wirksamen Mengen. Das Polypropylenpolymere enthält zum überwiegenden Teil (mindestens 90 %) Propylen und besitzt einen Schmelzpunkt von 140 °C oder höher, vorzugsweise 150 bis 170 °C. Isotaktisches Homopolypropylen mit einem n-heptanlöslichen Anteil von 6 Gew.-% und weniger, bezogen auf das isotaktische Homopolypropylen, Copolymere von Ethylen und Propylen mit einem Ethylengehalt von 5 Gew.-% oder weniger, Copolymere von Propylen mit C₄-C₈-α-Olefinen mit einem α-Olefingehalt von 5 Gew.-% oder weniger stellen bevorzugte Propylenpolymere für die Basisschicht dar, wobei isotaktisches Polypropylen besonders bevorzugt ist. Das Propylenpolymere der Basisschicht hat im allgemeinen einen Schmelzflußindex von 0,5 g/10 min bis 10 g/10 min, vorzugsweise 1,5 g/10 min bis 4 g/10 min, bei 230 °C und einer Kraft von 21,6 N (DIN 53 735). Die angegebenen Gewichtsprozente beziehen sich auf das jeweilige Copolymer.

Unter nicht siegelfähigen Olefinpolymeren werden im Rahmen der vorliegenden Erfindung Homopolymere des Propylens sowie Mischungen aus diesen Homopolymeren verstanden. Das Polypropylenpolymere enthält zum überwiegenden Teil (mindestens 90 %) Propylen und besitzt einen Schmelzpunkt von 140 °C oder höher, vorzugsweise 150 bis 170 °C. Isotaktisches Homopolypropylen mit einem n-heptanlöslichen Anteil von 6 Gew.-% und weniger, bezogen auf das isotaktische Homopolypropylen, Copolymere von Ethylen und Propylen mit einem Ethylengehalt von 5 Gew.-% oder weniger, Copolymere von Propylen mit C₄-C₈-α-Olefinen mit einem α-Olefingehalt von 5 Gew.-% oder weniger stellen bevorzugte Propylenpolymere für die nicht siegelfähige Deckschicht dar, wobei isotaktisches Polypropylen besonders bevorzugt ist. Das Propylenpolymere der Basisschicht hat im allgemeinen einen Schmelzflußindex von 0,5 g/10 min bis 10 g/10 min, vorzugsweise 1,5 g/10 min bis 4 g/10 min, bei 230 °C und einer Kraft von 21,6 N (DIN 53 735). Die angegebenen Gewichtsprozente beziehen sich auf das jeweilige Copolymer.

Die erfindungsgemäße Mehrschichtfolie umfaßt zumindest die vorstehend beschriebene Basisschicht und mindestens eine Deckschicht, welche im wesentlichen die vorstehend beschriebenen nicht siegelfähigen Propylenpolymeren oder Mischungen daraus enthält. In einer bevorzugten Ausführungsform besteht die Deckschicht aus einem der vorstehend genannten Homopolymeren bzw. aus deren Mischungen. Je nach ihrem vorgesehenen Verwendungszweck kann die Mehrschichtfolie eine weitere Deckschicht auf der gegenüberliegenden Seite aufweisen. In einer bevorzugten Ausführungsform ist die Mehrschichtfolie dreischichtig, wobei gleiche oder verschiedene Deckschichten aufgebracht sein können.

Die Dicke der nicht siegelfähigen Deckschicht/en ist größer als 0,1 µm und liegt vorzugsweise im Bereich von 0,3 bis 2 µm, insbesondere 0,4 bis 1,5 µm, wobei beidseitige Deckschichten gleich oder verschieden dick sein können.

Die Gesamtdicke der erfindungsgemäßen Polyolefin-Mehrschichtfolie kann innerhalb weiter Grenzen variieren und richtet sich nach dem beabsichtigten Einsatz. Sie beträgt vorzugsweise 5 bis 100 µm, insbesondere 10 bis 60 µm, wobei die Basisschicht etwa 60 bis 97 % der Gesamtfoliendicke ausmacht.

Die Deckschicht enthält 0,1 bis 0,6 Gew.-% SiO₂, bezogen auf das Gewicht der Deckschicht, welches organisch nachbehandelt ist und welches einen mittleren Teilchendurchmesser von 2 bis 6 µm aufweist. SiO₂ wird im allgemeinen durch Mahlung von Silica-Gel hergestellt und ist eine synthetisch hergestellte hochporöse, reine Kieselsäure, welche eine völlig amorphe Struktur im Gegensatz zu kristallinen Kieselsäuren aufweist. Der SiO₂-Gehalt liegt im allgemeinen über 95 %, insbesondere im Bereich von 98 bis 99,5 %. Erfindungsgemäß sind die SiO₂-Teilchen organisch nachbehandelt und weisen eine Beschichtung auf, welche 0,5 bis 5 % einer aliphatischen Carbonsäure enthält. Als aliphatische Carbonsäuren sind aliphatische Hydroxydi- und -tricarbonsäuren oder Stearinsäure bevorzugt. Im allgemeinen weisen die Säuren zwei bis fünf, bevorzugt zwei bis drei, Hydroxygruppen auf. Als aliphatische Carbonsäuren sind Tartronsäure (Hydroxymalonsäure), Äpfelsäure (Monohydroxybernsteinsäure), Weinsäure (Dihydroxybernsteinsäure) und Citronensäure bevorzugt. Als ganz besonders vorteilhaft haben sich citronensäurehaltige Beschichtungen erwiesen. Aufgrund der organischen Beschichtung reagieren die SiO₂-Teilchen in wäßrigen Lösungen leicht sauer. Der pH-Wert einer 5%igen wäßrigen Suspension liegt in einem Bereich von 3 bis 5, bevorzugt beträgt er 4.

Überraschenderweise zeigen SiO₂-haltige Folien, die den obengenannten Bedingungen genügen, neben einem besonders guten Reibungskoeffizienten eine hervorragende Antistatik und ein sehr gutes Antiblock- und Abriebverhalten. Es hat sich gezeigt, daß die Mengen, in welchen Antistatika üblicherweise zugesetzt werden, erheblich reduziert werden können. Ebenfalls sehr überraschend wurde gefunden, daß die Transparenz der Folien trotz der großen Partikelgröße des SiO₂ kaum beeinträchtigt wird.

Zur Erzielung dieser Verbesserungen ist es wesentlich, ein organisch nachbehandeltes SiO₂ mit einer Teilchengröße größer 2 bis 6 µm zu verwenden. Durch diese Maßnahmen konnte des weiteren der Abrieb auf den Walzen während des Herstellungsprozesses drastisch vermindert werden. Dadurch sind keine zusätzlichen Reinigungsmaßnahmen mehr notwendig, welche die Herstellkosten empfindlich verteuern. Rückseiteneffekte bei der Coronabehandlung treten praktisch nicht mehr auf.

Neben diesem ausgewählten Deckschichtadditiv kann die erfindungsgemäße Mehrschichtfolie zusätzlich Neutralisationsmittel, Stabilisatoren, Gleitmittel, niedrigmolekulare Harze und Antistatika enthalten.

Neutralisationsmittel sind vorzugsweise Calciumstearat und/oder Calciumcarbonat einer mittleren Teilchengröße von höchstens 0,7 µm, einer absoluten Teilchengröße von kleiner 10 µm und einer spezifischen Oberfläche von mindestens 40 m²/g.

Als Stabilisatoren können die üblichen stabilisierend wirkenden Verbindungen für Ethylen-, Propylen- und andere α-Olefinpolymere eingesetzt werden. Deren Zusatzmenge liegt zwischen 0,05 und 2 Gew.-%. Besonders geeignet sind phenolische Stabilisatoren, Alkali-/Erdalkalistearate und/oder Alkali-/Erdalkalicarbonate.

Phenolische Stabilisatoren werden in einer Menge von 0,1 bis 0,6 Gew.-%, insbesondere 0,15 bis 0,3 Gew.-%, und mit einer Molmasse von mehr als 500 g/mol bevorzugt. Pentaerythrityl-Tetrakis-3-(3,5-di-Tertiärbutyl-4-Hydroxyphenyl)-Propionat oder 1,3,5-Trimethyl-2,4,6-tris(3,5-di-Tertiärbutyl-4-Hydroxybenzyl)benzol sind besonders vorteilhaft.

Gleitmittel sind höhere aliphatische Säureamide, höhere aliphatische Säureester, Wachse und Metallseifen sowie Polydimethylsiloxane. Die wirksame Menge an Gleitmittel liegt im Bereich von 0,03 bis 3 Gew.-%. Besonders geeignet ist der Zusatz von höheren aliphatischen Säureamiden im Bereich von 0,1 bis 0,4 Gew.-% in der Basisschicht und/oder den Deckschichten. Ein insbesondere geeignetes aliphatisches Säureamid ist Erucasäureamid.

Der Zusatz von Polydimethylsiloxanen ist im Bereich von 0,1 bis 2,0 Gew.-% bevorzugt, insbesondere Polydimethylsiloxane mit einer Viskosität von 10 000 bis 1 000 000 mm²/s.

Bei dem empfohlenen niedrigmolekularen Harz handelt es sich um ein natürliches oder synthetisches Harz mit einem Erweichungspunkt von 60 bis 180 °C, vorzugsweise 80 bis 150 °C, bestimmt nach ASTM E-28. Niedrigmolekulare Harze sind niedermolekulare Polymere, deren Molekulargewicht im allgemeinen in einem Bereich von 300 bis 8 000, vorzugsweise 400 bis 5 000, vorzugsweise 500 bis 2 000, liegt. Damit ist das Molekulargewicht der Harze deutlich niedriger als das der Propylenpolymeren, welche die Hauptkomponente der einzelnen Folienschichten bilden und im allgemeinen ein Molekulargewicht von über 100 000 haben. Unter den zahlreichen niedrigmolekularen Harzen sind die Kohlenwasserstoffharze bevorzugt, und zwar in Form der Erdölharze (Petroleumharze), Styrolharze, Cyclopentadienharze und Terpenharze (diese Harze sind in Ullmanns Encyklopädie der technischen Chemie, 4. Auflage, Band 12, Seiten 525 bis 555, beschrieben). Die wirksame Menge an niedrigmolekularem Harz beträgt 0,2 bis 15 Gew.-%, vorzugsweise 0,5 bis 10 Gew.-%, bezogen auf die Schicht. Geeignete Erdölharze sind in zahlreichen Schriften beschrieben wie beispielsweise EP-A-0 180 087, auf die hier ausdrücklich Bezug genommen wird.

Bevorzugte Antistatika sind Alkali-alkansulfonate, polyethermodifizierte, d. h. ethoxylierte und/oder propoxylierte Polydiorganosiloxane (Polydialkylsiloxane, Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit ω-Hydroxy-(C₁-C₄)-alkyl-Gruppen substituiert sind, wobei N,N-bis-(2-hydroxyethyl)-alkylamine mit 10 bis 20 Kohlenstoffatomen, vorzugsweise 12 bis 18 Kohlenstoffatomen, im Alkylrest besonders geeignet sind. Die wirksame Menge an Antistatikum liegt im Bereich von 0,05 bis 3 Gew.-%. Als Antistatikum ist weiterhin Glycerinmonostearat bevorzugt.

Die Erfindung betrifft weiterhin ein Verfahren zur Herstellung der erfindungsgemäßen Mehrschichtfolie nach dem an sich bekannten Coextrusionsverfahren. Im Rahmen dieses Verfahrens wird so vorgegangen, daß die den einzelnen Schichten der Folie entsprechenden Schmelzen durch eine Flachdüse coertrudiert werden, die so erhaltene Folie zur Verfestigung auf einer oder mehreren Walze/n abgezogen wird, die Folie anschließend biaxial gestreckt (orientiert), die biaxial gestreckte Folie thermofixiert und gegebenenfalls an der zur Behandlung vorgesehenen Oberflächenschicht corona- oder flammbehandelt wird.

Die biaxiale Streckung (Orientierung) kann simultan oder aufeinanderfolgend durchgeführt werden, wobei die aufeinanderfolgende biaxiale Streckung, bei der zuerst längs (in Maschinenrichtung) und dann quer (senkrecht zur Maschinenrichtung) gestreckt wird, bevorzugt ist.

Zunächst wird wie beim Coextrusionsverfahren üblich das Polymere bzw. die Polymermischung der einzelnen Schichten in einem Extruder komprimiert und verflüssigt, wobei die gegebenenfalls zugesetzten Additive bereits im Polymer bzw. in der Polymermischung enthalten sein können. Die Schmelzen werden dann gleichzeitig durch eine Flachdüse (Breitschlitzdüse) gepreßt, und die ausgepreßte mehrschichtige Folie wird auf einer oder mehreren Abzugswalzen abgezogen, wobei sie abkühlt und sich verfestigt.

Die so erhaltene Folie wird dann längs und quer zur Extrusionsrichtung gestreckt, was zu einer Orientierung der Molekülketten führt. In Längsrichtung wird vorzugsweise 4:1 bis 7:1 und in Querrichtung vorzugsweise 7:1 bis 10:1 gestreckt. Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens.

An die biaxiale Streckung der Folie schließt sich ihre Thermofixierung (Wärmebehandlung) an, wobei die Folie etwa 0,1 bis 10 s lang bei einer Temperatur von 140 bis 160 °C gehalten wird. Anschließend wird die Folie in üblicher Weise mit einer Aufwickeleinrichtung aufgewickelt.

Es hat sich als besonders günstig erwiesen, die Abzugswalze oder -walzen, durch die die ausgepreßte Folie auch abgekühlt und verfestigt wird, bei einer Temperatur von 20 bis 110 °C zu halten.

Die Temperaturen, bei denen Längs- und Querstreckung durchgeführt werden, können variieren. Im allgemeinen wird die Längsstreckung vorzugsweise bei 120 bis 150 °C und die Querstreckung vorzugsweise bei 150 bis 180 °C.

Gegebenenfalls kann/können wie oben erwähnt nach der biaxialen Streckung eine oder beide Oberfläche/n der Folie nach einer der bekannten Methoden corona- oder flammbehandelt werden.

Bei der Coronabehandlung wird zweckmäßigerweise so vorgegangen, daß die Folie zwischen zwei als Elektroden dienenden Leiterelementen hindurchgeführt wird, wobei zwischen den Elektroden eine so hohe Spannung, meist Wechselspannung (etwa 10 bis 20 kV und 20 bis 40 kHz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen.

Für eine Flammbehandlung mit polarisierter Flamme (vgl. US-A-4,622,237) wird eine elektrische Gleichspannung zwischen einem Brenner (negativer Pol) und einer Kühlwalze angelegt. Die Höhe der angelegten Spannung beträgt zwischen 500 und 3 000 V, vorzugsweise liegt sie im Bereich von 1 000 bis 2000 V. Durch die angelegte Spannung erhalten die ionisierten Atome eine erhöhte Beschleunigung und treffen mit größerer kinetischer Energie auf die Polymeroberfläche. Die chemischen Bindungen innerhalb des Polymermoleküls werden leichter aufgebrochen, und die Radikalbildung geht schneller vonstatten. Die thermische Belastung des Polymeren ist hierbei weitaus geringer als bei der Standardflammbehandlung. Außerdem ist die Wickelbarkeit einer solchen Folie besser als es bei der Standardflammbehandlung der Fall ist.

Die erfindungsgemäße Folie zeichnet sich durch einen sehr guten Reibungskoeffizienten (0,1 bis 0,3) in Verbindung mit guten antistatischen Eigenschaften aus. Der Oberflächenwiderstand ist im allgemeinen kleiner als 10¹³ Ω und liegt bevorzugt im Bereich von 10¹¹ bis 10¹² Ω. Die Folie ist gegenüber bekannten Folien in ihrem Glanz und in ihrer Trübung nicht beeinträchtigt. Die Trübung liegt, gemessen nach ASTM-D 1003-52, unter 2 %, vorzugsweise im Bereich von 0,5 bis 2 %, insbesondere im Bereich von 1,0 bis 1,8 %. Die Glanzwerte (DIN 67530) betragen im allgemeinen mindestens 110, vorzugsweise 120 bis 140, insbesondere 125 bis 135. Die Folie ist gleichzeitig sehr gut konfektionierbar und zeigt folglich eine hervorragende Rollenaufmachung und eine ausgezeichnete Planlage. Die Folie zeigt praktisch keine Neigung zum Verblocken, und es treten kaum noch Rückseiteneffekte auf.

Es wurde gefunden, daß SiO₂-Partikel mit einem mittleren Teilchendurchmesser von 2 µm und ohne organische Nachbehandlung nicht zu dem gewünschten Eigenschaftsprofil der Folie führen. Insbesondere tritt ein erheblicher Abrieb, Rückseiteneffekt und starkes Verblocken an bestimmten Stellen auf. Überraschenderweise konnten diese Probleme durch die Auswahl eines Teilchendurchmessers von 2 bis 6 µm in Verbindung mit einer organischen Nachbehandlung der Partikel gelöst werden, ohne daß die Transparenz der Folie durch Vakuolenbildung oder ihr Glanz wesentlich beeinträchtigt werden.

Die Erfindung wird nun anhand von Ausführungsbeispielen noch näher erläutert.

### Beispiel 1

Es wurde durch Coextrusion und anschließende stufenweise Orientierung in Längs- und Querrichtung eine dreischichtige Folie mit einer Gesamtdicke von 12 µm und einem ABA-Schichtaufbau hergestellt, d. h. die Basisschicht B war von zwei gleichen Deckschichten A umgeben.

Die Folie wurde vor der Aufrollung einer einseitigen Coronabehandlung unterzogen. Die Oberflächenspannung betrug auf dieser Seite infolge dieser Behandlung 40 mN/m. Alle Schichten enthielten zur Stabilisierung 0,13 Gew.-% Pentaerythrityl-Tetrakis-4-(3,5-ditertiärbutyl-4-hydroxyphenyl)-propionat(®Irganox1010) und als Neutralisationsmittel 0,06 Gew.-% Calciumstearat.

Die Basisschicht B bestand im wesentlichen aus einem Polypropylenhomopolymeren mit einem n-heptanlöslichen Anteil von 4 Gew.-% und einem Schmelzpunkt von 160 °C. Der Schmelzflußindex des Polypropylenhomopolymeren betrug 3,4 g/10 min bei 230 °C und 21,6 N Belastung (DIN 53 735). Die Basisschicht enthielt 0,15 Gew.-% Erucasäureamid mit einem Schmelzpunkt von 78 bis 82 °C.

Die polyolefinischen Deckschichten A bestanden im wesentlichen aus einem statistischen Propylenhomopolymeren mit einem n-heptanlöslichen Anteil von 4,0 Gew.-% und einem Schmelzpunkt von 160 °C. Der Schmelzflußindex des Homopolymeren betrug 3,6 g/10 min (DIN 53 735). Die Deckschichten enthielten 0,3 Gew.-% eines mit Zitronensäure organisch nachbehandelten Siliciumdioxids mit einem mittleren Teilchendurchmesser von 4 µm und 0,3 Gew.-% Polydialkylsiloxan mit einer Viskosität von 50 000 cSt. Die Dicke der Deckschichten betrug jeweils 0,5 µm.

### Beispiel 2

Beispiel 1 wurde wiederholt, jedoch wurden jetzt beide Seiten coronabehandelt. Die Vorbehandlungsintensität betrug 39 mN/m.

### Beispiel 3

Beispiel 1 wurde wiederholt, jedoch enthielt jetzt die Basisschicht kein Erucasäureamid. Dafür enthielten jetzt beide Deckschichten 0,5 Gew.-% Polydialkylsiloxan mit einer Viskosität wie in Beispiel 1.

### Beispiel 4

Beispiel 1 wurde wiederholt, jedoch betrug der Teilchendurchmesser des SiO₂ jetzt 5 µm.

### Vergleichsbeispiel 1

Beispiel 1 wurde wiederholt, jedoch war das SiO₂ nicht organisch nachbehandelt.

### Vergleichsbeispiel 2

Beispiel 1 wurde wiederholt, jedoch war das SiO₂ nicht organisch nachbehandelt und hatte einen Teilchendurchmesser von 2 µm.

### Vergleichsbeispiel 3

Beispiel 1 wurde wiederholt, jedoch betrug jetzt der Teilchendurchmesser 7 µm.

### Vergleichsbeispiel 4

Beispiel 1 wurde wiederholt, jedoch betrug jetzt der Teilchendurchmesser 7 µm. Das SiO₂ war nicht organisch nachbehandelt.

Die Eigenschaften der Folien gemäß Beispielen und Vergleichsbeispielen sind in der Tabelle zusammengefaßt.

Zur Charakterisierung der Rohstoffe und der Folien wurden die folgenden Meßmethoden benutzt:

### Schmelzflußindex

Der Schmelzflußindex wurde in Anlehnung an DIN 53 735 bei 21,6 N Belastung und 230 °C bzw. bei 50 N Belastung und 190 °C gemessen.

### Schmelzpunkt

DSC-Messung, Maximum der Schmelzkurve, Aufheizgeschwindigkeit 20 °C/min.

### Reibung

Die Reibung wurde in Anlehnung an DIN 53 375 bestimmt.

### Oberflächenspannung

Die Oberflächenspannung wurde mittels der sogenannten Tintenmethode (DIN 53 364) bestimmt.

### Oberflächenwiderstand

Der Oberflächenwiderstand wurde nach DIN 53 482 gemessen

### Antistatische Aufladung

Die antistatische Aufladung wurde entsprechend DIN/Entwurf 57 303, Teil 14, bestimmt.

### Folienabrieb

Für die Bestimmung des Folienabriebs wird die Folie über eine Zeitdauer von 10 min über einen Stahlstift geführt. Der auf dem Stahlstift gebildete Abrieb kann qualitativ und quantitativ bestimmt werden.

### Nachweis der organischen Beschichtung

Eine organische Nachbehandlung der SiO₂-Teilchen läßt sich mittels RMA nachweisen. Hierzu wird die Folienoberfläche mittels Sauerstoffeinwirkung über 15 min angeätzt, so daß die in der Folie enthaltenen SiO₂-Teilchen freiliegen. An diesen freigeätzten SiO₂-Teilchen wird eine ESCA-Messung durchgeführt. Organisch beschichtete SiO₂-Teilchen weisen im ESCA-Spektrum einen Kohlenstoff- und Sauerstoff-Peak auf, der bei unbeschichteten Teilchen nicht zu finden ist.

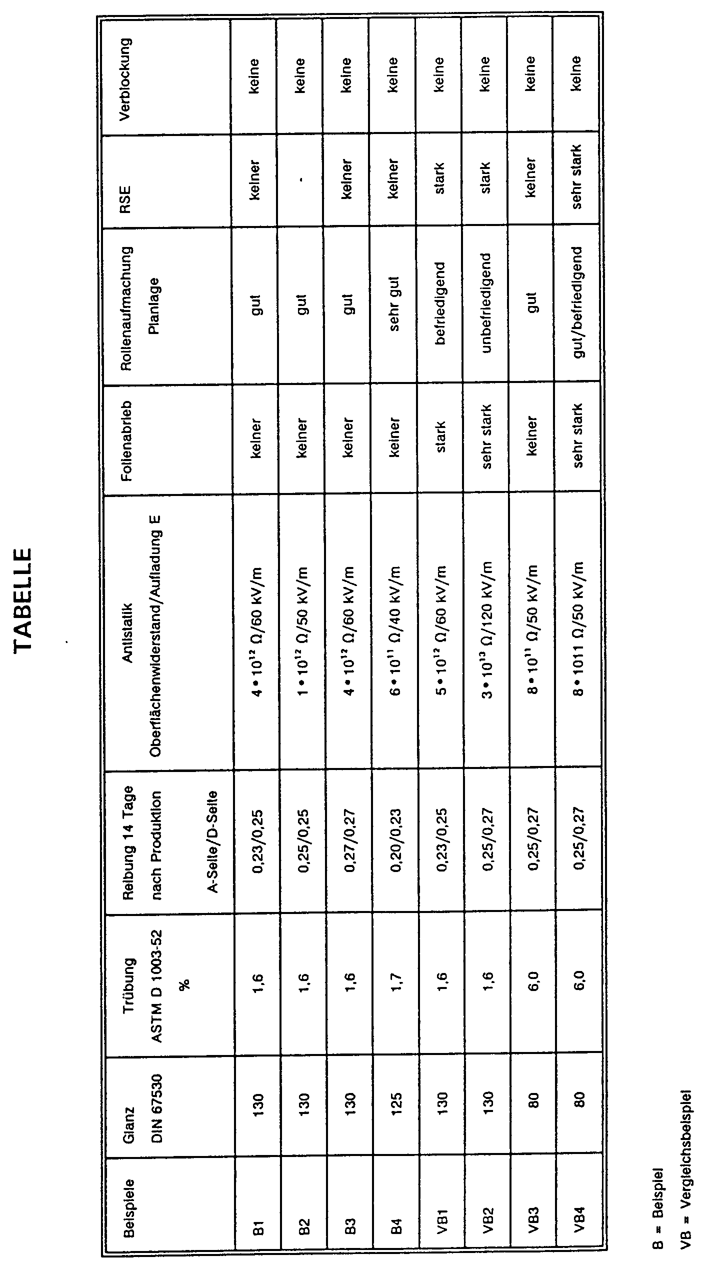

## Patentansprüche

1. Transparente, nicht siegelfähige orientierte Polyolefin-Mehrschichtfolie, umfassend eine Basisschicht, die Polypropylen enthält, und mindestens eine nicht siegelfähige Deckschicht die 0,1 bis 0,6 Gew.-% SiO₂ enthält, dadurch gekennzeichnet,
daß das SiO₂ organisch nachbehandelt ist und eine Beschichtung aufweist, die 0,5 - 5% einer aliphatischen Carbonsäure enthält und
daß das SiO₂ einen mittleren Teilchendurchmesser von 2 bis 6 µm aufweist.

2. Polyolefin-Mehrschichtfolie nach Anspruch 1, dadurch gekennzeichnet, daß die aliphatische Carbonsäure eine aliphatische Hydroxydicarbonsäure oder eine aliphatische Hydroxytricarbonsäure oder Stearinsäure ist.

3. Polyolefin-Mehrschichtfolie nach einem der Ansprüche 1 und/oder 2, dadurch gekennzeichnet, daß das SiO₂ eine citronensäurehaltige Beschichtung aufweist.

4. Polyolefin-Mehrschichtfolie nach einem oder mehreren der Ansprüche 1 bis 3, dadurch gekennzeichnet, daß das SiO₂ einen mittleren Teilchendurchmesser von 2 bis 5 µm, vorzugsweise 4 µm, aufweist.

5. Verfahren zur Herstellung der Polyolefin-Mehrschichtfolie nach Anspruch 1, bei dem die den einzelnen Schichten der Folie entsprechenden Schmelzen durch eine Flachdüse coextrudiert werden, die coextrudierte Folie über eine Abzugswalze, deren Temperatur zwischen 80 und 110 C liegt, abgezogen wird, die Folie biaxial gestreckt wird mit einem Längsstreckverhältnis von 4:1 bis 7:1 und einem Querstreckverhältnis von 8:1 bis 10:1, die biaxial gestreckte Folie thermofixiert, gegebenenfalls coronabehandelt und anschließend aufgewickelt wird.

6. Laminat, umfassend eine Mehrschichtfolie nach Anspruch 1 und Papier und/oder Pappe.

7. Verwendung einer Polyolefin-Mehrschichtfolie nach einem oder mehreren der Ansprüche 1 bis 4 als Verpackungsfolie.

8. Verwendung einer Polyolefin-Mehrschichtfolie nach einem oder mehreren der Ansprüche 1 bis 4 zur Weiterverarbeitung, vorzugsweise zur Bedruckung und/oder Kaschierung.

## Claims

1. A transparent, non-heat-sealable, oriented, multilayer polyolefin film comprising a base layer which contains polypropylene, and at least one non-heat-sealable outer layer, which contains from 0.1 to 0.6% by weight of SiO₂, wherein the SiO₂ has been subjected to organic aftertreatment and has a coating which contains 0.5-5% of an aliphatic carboxylic acid, and wherein the SiO₂ has a mean particle diameter of from 2 to 6 µm.

2. A multilayer polyolefin film as claimed in claim 1, wherein the aliphatic carboxylic acid is an aliphatic hydroxydicarboxylic acid or an aliphatic hydroxytricarboxylic acid or stearic acid.

3. A multilayer polyolefin film as claimed in claim 1 and/or 2, wherein the SiO₂ has a citric acid-containing coating.

4. A multilayer polyolefin film as claimed in one or more of claims 1 to 3, wherein the SiO₂ has a mean particle diameter of from 2 to 5 µm, preferably 4 µm.

5. A process for the production of a multilayer polyolefin film as claimed in claim 1, in which the melts corresponding to the individual layers of the film are coextruded through a flat-film die, the coextruded film is taken off over a take-off roll whose temperature is between 80 and 110°C, the film is stretched biaxially with a longitudinal stretching ratio of from 4:1 to 7:1 and a transverse stretching ratio of from 8:1 to 10:1, and the biaxially stretched film is heat-set, if desired corona-treated and subsequently wound up.

6. A laminate comprising a multilayer film as claimed in claim 1, and paper and/or cardboard.

7. A method of using a multilayer polyolefin film as claimed in one or more of claims 1 to 4 as a packaging film.

8. A method of using a multilayer polyolefin film as claimed in one or more of claims 1 to 4 for further processing, preferably for printing and/or lamination.

## Revendications

1. Feuille multicouche de polyoléfine orientée, impropre au scellage et transparente, comprenant une couche de base contenant du polypropylène, et au moins une couche de couverture impropre au scellage contenant 0,1 à 0,6 % en masse de SiO₂,
caractérisée en ce que le SiO₂ a subi un traitement ultérieur organique et présente un enrobage contenant 0,5 à 5 % en masse d'un acide carboxylique aliphatique, et en ce que le SiO₂ a un diamètre moyen de particules de 2 à 6 µm.

2. Feuille multicouche de polyoléfine selon la revendication 1, caractérisée en ce que l'acide carboxylique aliphatique est un acide hydroxydicarboxylique aliphatique ou un acide hydroxytricarboxylique aliphatique ou l'acide stéarique.

3. Feuille multicouche de polyoléfine selon la revendication 1 et/ou 2, caractérisée en ce que le SiO₂ a un enrobage contenant de l'acide citrique.

4. Feuille multicouche de polyoléfine selon l'une ou plusieurs des revendications 1 à 3, caractérisée en ce que le SiO₂ a un diamètre moyen de particules de 2 à 5 µm, de préférence de 4 µm.

5. Procédé de préparation d'une feuille multicouche de polyoléfine selon la revendication 1, selon lequel on soumet les masses fondues correspondant aux différentes couches de la feuille à une coextrusion à travers une filière plate, on tire la feuille coextrudée sur un cylindre de tirage dont la température est comprise entre 80 et 110°C, on soumet la feuille à un étirage biaxial avec un rapport d'étirage longitudinal de 4:1 à 7:1 et un rapport d'étirage transversal de 8:1 à 10:1, on fixe à la chaleur la feuille ayant subi l'étirage biaxial, on la soumet éventuellement à un traitement de couronne, puis on l'enroule.

6. Stratifié comprenant une feuille multicouche selon la revendication 1 et du papier et/ou du carton.

7. Utilisation d'une feuille multicouche de polyoléfine selon l'une ou plusieurs des revendications 1 à 4 comme feuille d'emballage.

8. Utilisation d'une feuille multicouche de polyoléfine selon l'une ou plusieurs des revendications 1 à 4 pour une mise en forme ultérieure, de préférence pour une impression et/ou un doublage.
